# FASCICULE DE BREVET EUROPEEN

(11) **EP 2 561 242 B1**
(45) Date de publication et mention de la délivrance du brevet: **07.05.2014**
(21) Numéro de dépôt: 11713286.0
(22) Date de dépôt: 11.04.2011
(51) Int. Cl.: F16D 59/02, F16D 65/14, F03C 1/04, F04C 15/00

(54) **FREIN MULTIPLICATEUR D'EFFORT**
BREMSE MIT BREMSKRAFTVERSTÄRKER
BRAKE WITH FORCE AMPLIFIER

(30) Priorité: 19.04.2010 FR 1052945
(43) Date de publication de la demande: 27.02.2013
(73) Titulaire: Poclain Hydraulics Industrie, 60410 Verberie (FR)
(72) Inventeur: VIDAL, Stéphane, F-60410 Verberie (FR); CHAUDOT, Nicolas, F-60410 Verberie (FR)
(74) Mandataire: Regimbeau
(86) Numéro de dépôt international: PCT/EP2011/055582
(87) Numéro de publication internationale: WO 2011/131498

(56) Documents cités:
- FR-A- 1 600 966
- FR-A1- 2 462 586
- GB-A- 2 117 465

## Description

### DOMAINE TECHNIQUE GENERAL

L'invention concerne les dispositifs de freinage pour moteurs, et trouve une application particulière dans les dispositifs de freinage pour moteurs hydrauliques à pistons radiaux.

### ETAT DE L'ART

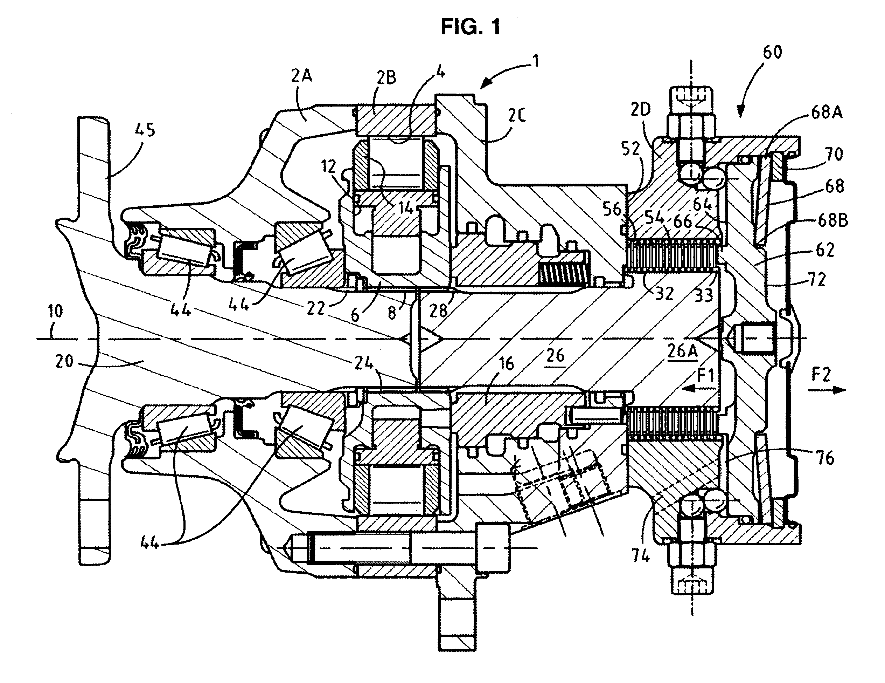

La figure 1 présente un moteur hydraulique 1 muni d'un dispositif de freinage tel que présenté dans le document FR 2761431, comprenant :
- un carter fixe en plusieurs parties 2A, 2B, 2C et 2D,
- une came de réaction ondulée 4, ménagée sur la périphérie interne de la partie 2B du carter;
- un bloc-cylindres 6 qui est monté en rotation relative autour d'un axe de rotation 10 par rapport à la came 4, ce bloc-cylindres comprenant une pluralité de cylindres radiaux 12 susceptibles d'être alimentés en fluide sous pression, à l'intérieur desquels sont montés coulissants des pistons 14;
- un distributeur interne de fluide 16, solidaire du carter vis-à-vis de la rotation autour de l'axe 10 et comportant des conduits de distribution susceptibles de communiquer avec les cylindres 12;
- un arbre 20 qui s'étend à l'intérieur du carter coaxialement à l'axe de rotation 10 et est en prise avec le bloc-cylindres par l'intermédiaire de cannelures axiales 22 réalisées à la périphérie de l'arbre et de cannelures 24 complémentaires réalisées sur l'alésage 8 du bloc-cylindres; et
- un arbre de frein 26, également en prise avec le bloc-cylindres, par l'intermédiaire de cannelures 28 ménagées sur sa périphérie externe et qui coopèrent avec les cannelures 24 de l'alésage du bloc-cylindres, cet arbre 26 traversant un alésage du distributeur 16 et comprenant une extension 26A, qui est située au-delà du distributeur et qui porte des lamelles de disques de frein 32.

Le moteur 1 comprend un dispositif de freinage 60 qui comprend un carter de frein 2D.
L'arbre de frein 26, par son prolongement 26A, qui dépasse en fait au-delà de l'extrémité axiale 52 de la partie 2C du carter opposée au bloc-cylindres 6, s'étend à l'intérieur du carter de frein 2D. Ce prolongement 26A constitue l'organe interne au carter de frein précédemment évoqué.

L'arbre 20 est monté rotatif par rapport au carter 2A, 2B, 2C et 2D, autour de l'axe de rotation 10, par l'intermédiaire d'un palier de roulements comprenant ici des roulements à rouleau 44 disposés selon un montage en O, de manière à écarter les centres de rotation des roulements. L'extrémité libre de cet arbre située en dehors du carter 2A, 2B, 2C et 2D comporte un plateau d'accouplement permettant de le solidariser avec un organe qui doit être entraîné en rotation par le moteur.

Le dispositif 60 comprend une première série de lamelles annulaires de frein 54, plus communément appelés disques de frein, qui sont solidaires du carter de frein 2D.
A cet effet, les lamelles présentent, sur leurs extrémités radiales externes, des indentations de forme complémentaire de la forme de cannelures 56 réalisées sur un alésage central du carter de frein 2D.
Les lamelles de disques de frein 32 précédemment évoquées sont, quant à elles, solidaires en rotation de l'arbre de frein 26, leurs extrémités radiales internes présentant à cet effet des indentations de forme complémentaire de la forme de cannelures axiales 33 réalisées sur la périphérie du prolongement 26A de l'arbre de frein. Les lamelles 54 sont intercalées entre les lamelles 32 et réciproquement, de manière à obtenir une alternance entre les lamelles 54 et les lamelles 32.

Le dispositif 60 comporte également un piston de freinage 62 dont la face 64 qui est dirigée vers le distributeur et le bloc-cylindres présente une zone d'appui 66 dont l'extrémité axiale s'étend sensiblement transversalement par rapport à l'axe 10, en regard de l'empilement de lamelles 32 et 54.

Une rondelle ressort 68, typiquement une rondelle Belleville, est montée en butée selon sa périphérie externe 68A sur un anneau d'arrêt 70 lié au carter 2D. Cette rondelle ressort 68 est également en contact avec la face externe 72 du piston de freinage 62 opposée à sa face 64 selon sa périphérie interne 68B. Cette rondelle ressort permet de solliciter élastiquement le piston de freinage 62 pour le déplacer dans un premier sens F1, vers sa position de freinage représentée sur la figure 1, dans laquelle la zone d'appui 66 sollicite axialement les lamelles 32 et 54 en contact de freinage.

Lorsque la zone d'appui 66 pousse axialement les lamelles dans le sens F1, un effort de frottement s'établit entre les faces radiales des lamelles intercalées 54 et 32, ce qui va freiner la rotation relative des arbres 26 et 20 par rapport au carter 2A, 2B, 2C et 2D.

Le dispositif de freinage 60 comporte encore des moyens hydrauliques permettant de déplacer axialement le piston de freinage 62 dans le sens F2 opposé à F1, contre l'action de la rondelle ressort 68, pour amener ce piston dans une position de défreinage dans laquelle le contact de freinage est supprimé. Lorsque la poussée de la zone d'appui 66 dans le sens F1 sur les lamelles cesse, les lamelles 32 et 54 peuvent librement tourner les unes par rapport aux autres, leur contact de frottement étant supprimé.
Ces moyens hydrauliques comprennent un conduit 74 d'alimentation en fluide de défreinage, indiqué en traits interrompus sur la figure 1 (tel qu'illustré sur la figure 1, il ne se trouve pas dans le plan de la figure) et une chambre de défreinage 76 ménagée du côté de la face 64 du piston de freinage, chambre dans laquelle débouche le conduit 74. L'alimentation de la chambre 76 en fluide sous pression va solliciter le piston 62 en déplacement dans le sens F2, le défreinage n'étant effectif que si la pression vient générer un effort supérieur ou égal à celui généré par la rondelle ressort 68. Le Document GB 2117465 révèle un dispositif de freinage selon le préambule de la revendication 1.

Par conséquent, dans le cas où le l'utilisateur souhaite obtenir une force de freinage plus élevée, l'augmentation de la force de freinage nécessite une augmentation correspondante de la pression de défreinage, qui n'est pas forcément envisageable par le circuit hydraulique ou qui nécessiterait un surdimensionnement important.

De plus, il est nécessaire d'utiliser des éléments ayant des dimensions importantes de manière à pouvoir résister à la pression de defreinage plus importante.

L'invention vise à proposer un dispositif de freinage pour véhicule à moteur présentant un couple de frein augmenté par rapport aux solutions actuelles, tout en conservant une pression de défreinage et un encombrement inchangé.

### PRESENTATION DE L'INVENTION

L'invention vise à répondre à ces problématiques, et présente un dispositif de freinage comprenant
- un carter de frein monté en rotation relative par rapport à un arbre,
- des premiers moyens de freinage, solidaires en rotation du carter de frein,
- des seconds moyens de freinage solidaires en rotation de l'arbre, adaptés pour coopérer avec lesdits premiers moyens de freinage,
- un piston de freinage adapté pour solliciter lesdits premiers moyens de freinage,
- au moins une rondelle ressort comprenant une première face, une seconde face, une périphérie interne et une périphérie externe, ladite rondelle ressort étant montée en appui sur le carter de frein selon une zone d'appui de carter située sur l'une des périphéries interne ou externe de la première face de ladite rondelle ressort, ladite rondelle ressort présentant sur sa seconde face une zone d'appui de freinage, adaptée pour coopérer avec le piston de freinage de manière à solliciter les premiers moyens de freinage selon un sens de freinage,
ledit dispositif étant caractérisé en ce que :
- il comprend un piston de défreinage, adapté pour solliciter les moyens élastiques selon un sens antagoniste audit sens de freinage,
- la au moins une rondelle ressort présente une zone d'appui de défreinage avec le piston de défreinage sur l'autre des périphéries interne ou externe de la seconde face de la rondelle ressort, ladite zone d'appui de freinage étant située à une position intermédiaire de la au moins une rondelle ressort, entre la zone d'appui de carter et la zone d'appui de défreinage.

Selon des modes de réalisation particuliers, l'invention présente une ou plusieurs des caractéristiques suivantes, pouvant être prises individuellement ou en combinaison :
- la zone d'appui de freinage est sensiblement au tiers de la distance entre la périphérie interne et la périphérie externe de ladite rondelle ressort;
- lesdits premiers et seconds moyens de freinage comprennent un empilement de lamelles alternées ;
- le dispositif est encadré par des roulements, lesdits roulements pouvant être des roulements coniques, disposés de part et d'autre dudit dispositif de freinage sur l'arbre et montés en O ;
- les premiers et seconds moyens de freinage ainsi que le piston de défreinage sont montés de manière concentrique sur l'axe, le piston de défreinage étant disposé sensiblement à la périphérie extérieure des premiers et seconds moyens de freinage ;
- le dispositif comprend une butée de contact adaptée pour coopérer avec la rondelle ressort et les premiers et seconds moyens de freinage, ladite butée de contact étant disposée sensiblement en vis-à-vis du piston de freinage.

Selon une variante, lesdits pistons de freinage et de défreinage sont alimentés en pression par des conduits d'alimentation en pression distincts, et ont des chambres de mise en pression distinctes.

Selon une autre variante, lesdits pistons de freinage et de défreinage sont alimentés par un même conduit d'alimentation en pression et ont une chambre de mise en pression commune.

L'invention concerne également un moteur hydraulique muni d'un tel dispositif de freinage.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
La figure 1 a déjà été décrite précédemment, et présente un moteur hydraulique selon l'état de l'art muni d'un dispositif de freinage.
Les figures 2, 3 et 4 présentent un dispositif de freinage amélioré conforme à un mode de réalisation de l'invention dans trois configurations distinctes.
La figure 5 présente un dispositif de freinage amélioré associé à d'autres éléments d'un moteur hydaulique.
Les figures 6 et 7 présentent un autre mode de réalisation d'un dispositif de freinage amélioré conforme à l'invention.

### DESCRIPTION DETAILLEE

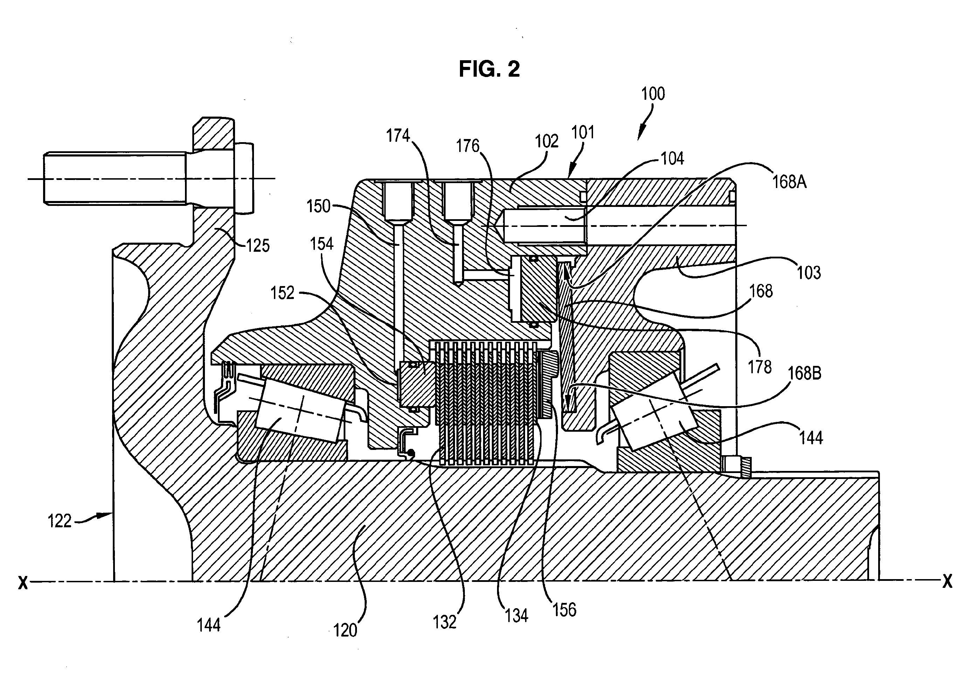

La figure 2 présente une vue partielle d'un dispositif de freinage 100 amélioré conforme à l'invention trouvant une application particulière pour les moteurs hydrauliques et permettant de réaliser un freinage statique ou dynamique.

Le dispositif de freinage 100 amélioré est monté sur un arbre 120, et comprend :
- un carter de frein 101 comprenant ici deux parties : une partie externe 102 et une partie interne 103, ces deux parties 102 et 103 étant assemblées de manière à être fixes l'une par rapport à l'autre via un moyen de liaison 104,
- des premiers moyens de freinage 134 solidaires en rotation du carter de frein 101, ici sous la forme de lamelles annulaires centrées sur l'axe X-X,
- des seconds moyens de freinage 132 solidaires en rotation de l'arbre 120, typiquement des lamelles annulaires centrées sur l'axe X-X les premiers et seconds moyens de freinage 132 et 134 étant disposés de manière alternée, de manière à réaliser un empilement de lamelles 132 et 134 intercallées,
- des moyens élastiques 168, prenant ici la forme d'une rondelle ressort 168,
- un conduit d'alimentation de freinage 150, une chambre de freinage 152 et un piston de freinage 154 de forme annulaire centré sur l'axe X-X,
- une butée de contact 156,
- un conduit d'alimentation de défreinage 174, une chambre de défreinage 176 et un piston de défreinage 178 de forme annulaire centré sur l'axe X-X.

L'arbre 120 est en rotation relative par rapport au carter de frein 101 autour de l'axe de rotation X-X, par l'intermédiaire d'un palier de roulements comprenant ici des roulements à rouleaux coniques 144. L'extrémité libre 122 de cet arbre 120 située en dehors du carter de frein comporte un plateau d'accouplement 125 permettant de le solidariser avec un organe qui doit être entraîné en rotation par le moteur.

La rondelle ressort 168, est typiquement une rondelle Belleville. Une telle rondelle a une forme annulaire conique présentant une périphérie interne 168B et une périphérie externe 168A, et assure une fonction de ressort. Dans le mode de réalisation illustré sur les figures 2 à 4, la rondelle ressort 168 a une forme concave vers l'empilement de lamelles 132 et 134.

On remarque plusieurs différences de structure entre le dispositif présenté sur cette figure et le dispositif selon l'état de l'art tel que présenté sur la figure 1, notamment en ce qui concerne le placement de la rondelle ressort 168.

En effet, dans le dispositif selon l'état de l'art illustré sur la figure 1, la rondelle ressort 68 est en appui sur deux éléments : l'anneau d'arrêt 70 d'une part, et le piston de frein 62 d'autre part. C'est alors ce piston de frein 62 qui va coopérer directement avec les lamelles 32 pour produire le freinage ou le défreinage.

Dans le dispositif de freinage 100 amélioré conforme à l'invention présenté sur la figure 2, la rondelle ressort 168 présente des zones d'appui avec trois éléments:
- une zone d'appui de carter avec la partie interne 103 du carter de frein 101, sur une première face de la rondelle ressort 168 et selon la périphérie interne 168B de la rondelle ressort 168, la partie interne 103 du carter de frein 101 présentent typiquement un usinage conique de manière à ce que la rondelle ressort 168 s'y appuie de manière satisfaisante en position défreinée,
- une zone d'appui de défreinage avec le piston de défreinage 178, sur la face de la rondelle ressort 168 opposée à la face de la zone d'appui de carter, et selon la périphérie externe 168A de la rondelle ressort 168,
- une zone d'appui de freinage avec la butée de contact 156, sur la même face de la rondelle que la zone d'appui de défreinage, à une position intermédiaire entre la périphérie interne 168B et la périphérie externe 168A de la rondelle ressort 168, la position intermédiaire étant à une distance typiquement inférieure à la mi-distance entre ladite périphérie interne 168B et ladite périphérie externe 168A de la rondelle ressort 168, préférentiellement de l'ordre du tiers de cette distance.

La rondelle ressort 168 a donc trois zones d'appui.

Selon d'autres modes de réalisation, le positionnement de la zone d'appui de carter et de la zone d'appui de défreinage peut être inversé, la zone d'appui de carter étant alors selon la périphérie externe 168A de la rondelle ressort 168, tandis que la zone d'appui de défreinage est selon la périphérie interne 168B de la rondelle ressort 168.

La rondelle ressort 168 et/ou les différentes pièces en appui sur la rondelle ressort 168 présentent typiquement des formes adaptées pour définir un point d'appui donné, par exemple un bossage réalisé sur la rondelle ressort 168 ou bossage réalisé sur la pièce en appui sur la rondelle ressort 168, typiquement le piston de défreinage 178 ou la butée de contact 156.
D'autres variantes sont possibles, par exemple souder ou agrafer un anneau sur la rondelle ressort 168 ou sur un élément en appui sur la rondelle ressort 168.

Le positionnement de ces zones d'appui définit un bras de levier différent pour les efforts appliqués sur la rondelle ressort 168 par le piston de freinage 154 et le piston de défreinage 178.
En effet, le bras de levier de l'effort appliqué par le piston de défreinage 178 correspond à la distance séparant la périphérie interne 168B de la périphérie externe 168A de la rondelle ressort 168, tandis que le bras de levier de l'effort appliqué au niveau de la zone d'appui de freinage correspond à la distance séparant la périphérie interne 168B de la rondelle ressort 168 et la position intermédiaire de la zone d'appui de freinage, qui est inférieure à la précédente.

De plus, le dispositif de freinage 100 selon une variante de l'invention tel qu'illustré sur la figure 2 comprend l'empilement de lamelles 132 et 134 disposé entre d'une part le piston de freinage 154, et d'autre part la butée de contact 156.

Ainsi, l'empilement de lamelles 132 et 134 peut être soumis à un effort de compression résultant à la fois de la rondelle ressort 168 et du piston de freinage 154.

Le freinage et le défreinage sont réalisés en faisant varier l'effort de compression exercé sur l'empilement de lamelles 132 et 134 ; lorsque les lamelles 132 et 134 sont compressées, elles réalisent un effort de frottement de manière à s'opposer au mouvement en rotation de l'arbre 120. Lorsque les lamelles 134 et 132 ne sont pas soumises à un effort de compression, le dispositif 100 est alors en position défreinée.

La compression des lamelles 132 et 134 est réalisée via l'application de pressions distinctes via le conduit d'alimentation de freinage 150 et le conduit d'alimentation de défreinage 174, de manière à appliquer des pressions distinctes dans les chambres de freinage 152 et de défreinage 176, ces deux chambres 152 et 176 étant distinctes dans ce mode de réalisation.
Tel qu'illustré sur la figure 2, le dispositif de freinage amélioré 100 est en position de défreinage.

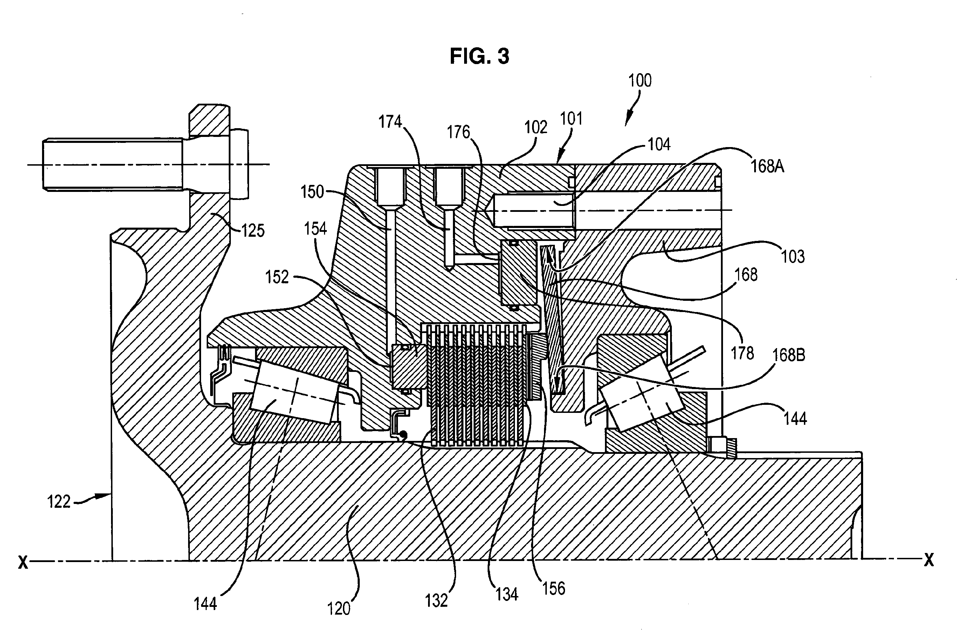

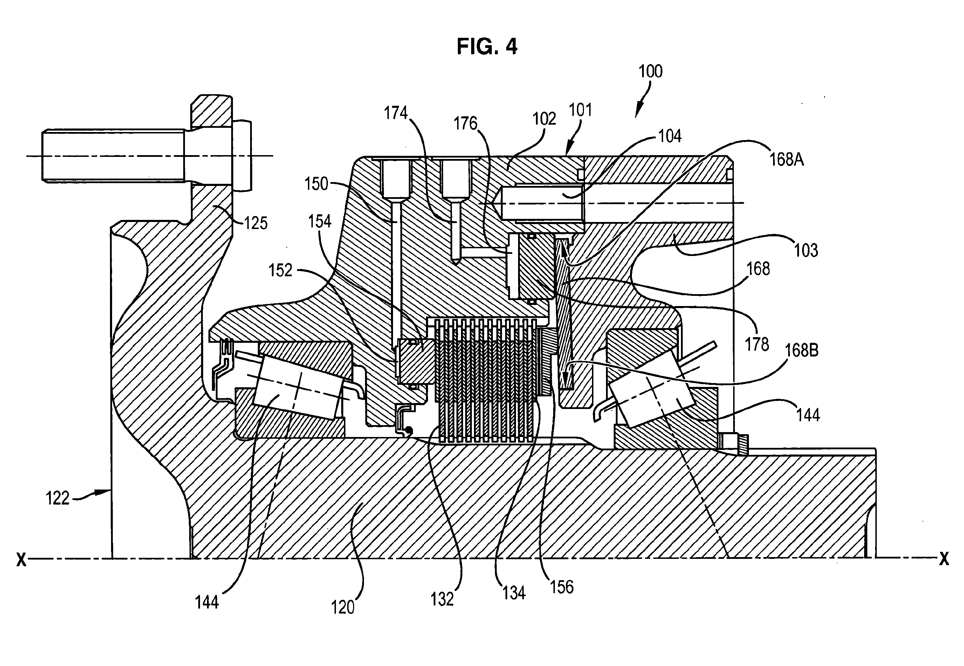

Les figures 3 et 4 seront quant à elles détaillées par la suite, et illustrent ce même dispositif de freinage amélioré 100 respectivement en position de freinage statique et de freinage dynamique.

En position de défreinage, aucune pression n'est appliquée via le conduit d'alimentation de freinage 150, tandis qu'une pression peu élevée est appliquée via le conduit de défreinage, typiquement de l'ordre de 15 bars.

Le piston de défreinage 178 est alors au contact de la rondelle ressort 168, et exerce un effort sur cette dernière.
La rondelle ressort 168 est alors soumise à un effort de flexion, qui implique que cette dernière n'exerce aucun effort sur la butée de contact 156, et donc que les lamelles 132 et 134 ne sont pas soumises à un effort de compression.
Le dispositif de freinage 100 est donc bien en position de défreinage.

Dans la configuration illustrée sur la figure 3, aucune pression n'est appliquée via le conduit de freinage 150 ou via le conduit de défreinage 174. Le piston de défreinage 178 n'applique plus d'effort sur la rondelle ressort 168, c'est alors la butée de contact 156 qui est au contact de la rondelle ressort 168.
En effet, la rondelle ressort 168 n'est alors plus soumise à un effort de flexion, et vient alors au contact de la butée de contact 156 en y exerçant un effort, qui va être transmis aux lamelles 132 et 134 de manière à comprimer celles-ci.
On réalise donc un freinage statique ; assuré par l'action de la rondelle ressort 168.

La figure 4 présente le dispositif de freinage 100 en position de freinage dynamique.
Dans cette configuration, des pressions distinctes sont appliquées via le conduit de freinage 150 et via le conduit de défreinage 174.

Le piston 154 exerce alors un effort sur les lamelles 132 et 134 selon la face des lamelles opposée à la butée de contact 156, et qui exerce un effort sur la rondelle 168.

Le piston de défreinage 178 permet quant à lui de faire varier l'effort exercé par la rondelle ressort 168 sur la butée de contact 156 de manière proportionnelle

Dans un cas particulier de réalisation, les pressions appliquées via le conduit de freinage 150 et via le conduit de défreinage 174 sont respectivement de 120 Bars et de 15 Bars.

Pour repasser à la position de défreinage tel qu'elle a été présentée sur la figure 2, il suffit alors de cesser d'appliquer une pression via le conduit de freinage 150.
Le dispositif basculera alors vers la position de défreinage dans laquelle seul le piston de défreinage 178 est au contact de la rondelle ressort 168.

Ce dispositif de freinage exploite donc l'effort généré par la rondelle ressort 168 en un point sensiblement à mi-distance entre sa périphérie interne 168B et sa périphérie externe 168A, là où l'effort qu'elle fournit est le plus important pour réaliser un freinage, et vient appuyer sur l'extrémité de ladite rondelle ressort 168 où l'effort est le plus faible pour réaliser un défreinage.

Selon un premier aspect, le système de frein présenté permet d'augmenter le couple de frein tout en conservant une pression de défreinage et un encombrement inchangé.

En effet, dans ce dispositif de freinage amélioré 100, la butée de contact 156 a une zone d'appui sur la rondelle ressort 168 disposée sensiblement vers le centre de cette rondelle ressort 168.

Or, en appliquant ainsi un effort sur une zone sensiblement vers le centre de la rondelle ressort 168 et non pas à son extrémité, l'effort délivré par la rondelle ressort 168 est multiplié par rapport à celui délivré par la rondelle d'un dispositif de freinage selon l'état de l'art, typiquement par un coefficient de l'ordre de 3.5 pour une rondelle ressort 168 ayant un diamètre intérieur de l'ordre de 120 mm et extérieur de 265
L'effort de compression transmis aux lamelles 132 et 134 est par conséquent nettement supérieur par rapport aux dispositifs selon l'état de l'art, ce qui entraîne un effort de freinage plus important.

Selon un autre aspect le système de freinage tel que présenté, permet pour une pression de freinage inchangée, d'utiliser un empilement de lamelles comprenant moins de lamelles que dans les systèmes de freinage conventionnel
En effet, plus le nombre de lamelles 134 et 132 est faible, plus l'effort qu'il est nécessaire d'appliquer pour garantir un couple de freinage donné est important. Or, en raison de l'effort délivré par la rondelle qui est accru, il est possible d'utiliser un nombre réduit de lamelles 134 et 132, typiquement de l'ordre de 30%, tout en maintenant un couple de freinage du même ordre de grandeur.

En outre, le dispositif de freinage tel que présenté peut être défreiné en appliquant une pression plus faible que par rapport aux dispositifs selon l'état de l'art.
En effet, pour un effort de freinage identique, le dispositif de freinage amélioré permet d'utiliser une rondelle ressort ayant une épaisseur moindre, et nécessitant donc une pression réduite pour être fléchie. Le gain de pression est par exemple de l'ordre de 25%.

Les figures 2 à 4 présentent par ailleurs un positionnement spécifique du dispositif de freinage 100, qui est disposé à l'extrémité libre 122 de l'arbre 120, et est encadré par les roulements 144 montés en O. Le dispositif de freinage 100 est ainsi disposé dans le palier de roulements.
Plus précisément, dans ce mode de réalisation, les lamelles 132 et 134 sont agencées sur la périphérie de l'arbre 120, encadrées de part et d'autres par les roulements 144. La rondelle ressort 168 est également disposée dans le palier de roulements, au moins partiellement en vis-à-vis des lamelles 132 et 134, de manière à ce que la butée de contact 156 qui est disposée au contact des lamelles 132 et 134 soit également en vis-à-vis de la rondelle ressort 168.
Le piston de freinage 154 est quant à lui disposé en contact des lamelles 132 et 134, de manière à être sensiblement aligné avec la butée de contact 156, afin d'optimiser le contact sur les lamelles 132 et 134, de manière à éviter de déformer les pièces. Le piston de défreinage 178 est disposé centré sur l'arbre 120, à une distance de l'arbre 120 supérieure à la distance entre l'arbre 120 et les lamelles 132 et 134. Ainsi, le piston de défreinage est disposé à la périphérie extérieure des lamelles 132 et 134, ce qui est illustré sur la vue en coupe présentée sur les figures 2 à 4 par la superposition de ces éléments. Les lamelles 132 et 134 sont disposées sensiblement au centre du piston de défreinage 178.

Cet agencement particulier du piston de défreinage 178 et des lamelles 132 et 134 permet un gain en termes d'encombrement en particulier en termes d'encombrement selon la longueur de l'axe 120, et permet de réaliser un dispositif de freinage 100 ayant une forte compacité axiale.

Ce positionnement du dispositif de freinage dans le palier de roulements permet de libérer le distributeur interne de fluides présenté sur la figure 1, lequel est disposé à l'extrémité de l'arbre 120 opposée à l'extrémité libre 122.
Ainsi, contrairement au moteur hydraulique selon l'état de l'art, dans lequel le distributeur interne de fluides est encadré d'une part par le palier de roulements, et d'autre part par le dispositif de freinage, il est possible d'associer d'autres éléments au distributeur du fluide, typiquement des sélecteurs de commande de cylindrée, des valves d'échange ou tout autre élément adapté.

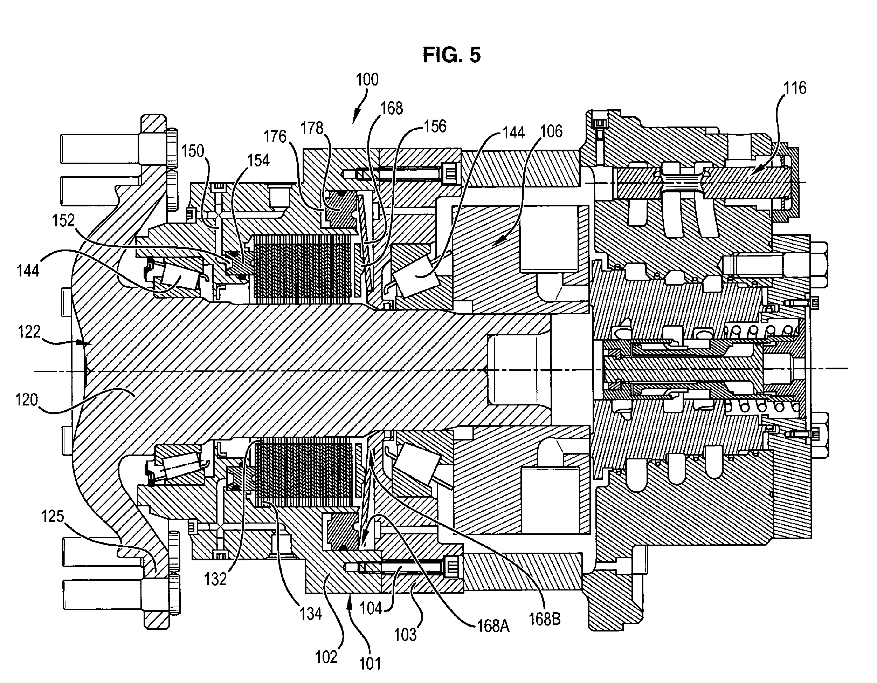

La figure 5 illustre ainsi un dispositif de freinage similaire à celui présenté sur les figures 2 à 4, associé à un bloc cylindre 106 et à un distributeur 116.
Les éléments similaires à ceux présentés sur les figures 2 à 4 sont repérés par des références numériques identiques, à savoir :
- l'arbre 120 présentant un plateau d'accouplement 125,
- le carter de frein 101 comprenant deux parties 102 et 103, assemblées via un élément d'assemblage 104,
- des roulements 144,
- des lamelles 132 et 134 respectivement solidaires en rotation de l'arbre 120 et du carter 102,
- un piston de freinage 154, une chambre de freinage 152 et un conduit d'alimentation de freinage 150,
- un piston de défreinage 178, une chambre de défreinage 176, le conduit d'alimentation de défreinage n'étant ici pas représenté,
- une rondelle ressort 168,
- une butée de contact 156.

Tel qu'illustré sur la figure 5, le bloc cylindre 106 et le distributeur 116 sont disposés dans cet ordre à la suite du dispositif de freinage 100, à l'extrémité de l'arbre 120 opposée à son extrémité libre 122 présentant le plateau d'accouplement 125.

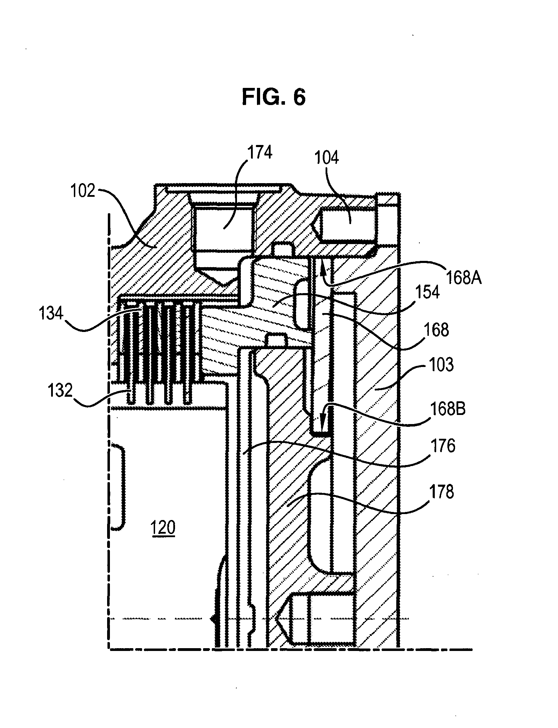

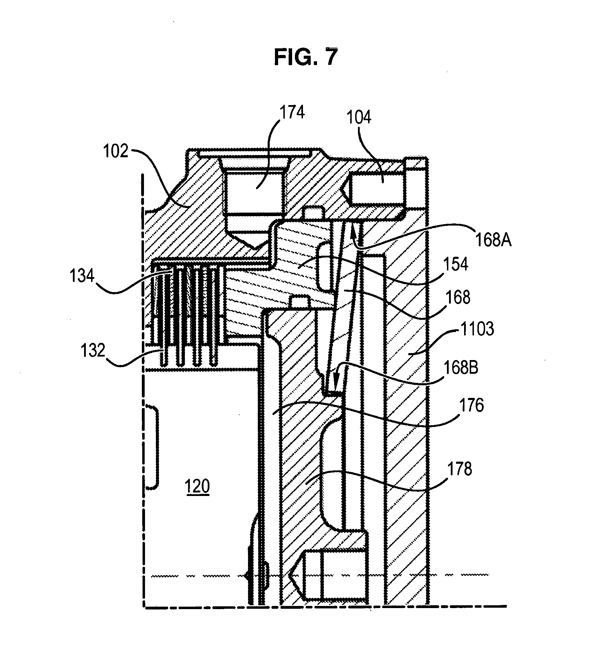

Les figures 6 et 7 présentent une vue détaillée d'un autre mode de réalisation d'un dispositif de freinage amélioré, permettant de réaliser un freinage statique. Ces figures présentent ce mode de réalisation respectivement en position défreinée et en position de freinage statique.

Dans ce mode de réalisation particulier de l'invention, le dispositif de freinage selon l'invention est disposé à une extrémité de l'arbre 120 de la même manière que le dispositif de freinage présenté précédemment sur la figure 1.

Ce mode de réalisation comprend des éléments communs au mode de réalisation présenté sur les figures 2 à 4, mais en diffère notamment en ce que les pistons de freinage 154 et de défreinage 178 sont alimentés par un même conduit d'alimentation de défreinage 174, et ont une chambre de défreinage 176 commune.

Dans ce mode de réalisation, la rondelle ressort 168 est un anneau conique, convexe vers l'empilement de lamelles 132 et 134. Le piston de défreinage 178 a une section en forme de disque centré sur l'arbre 120, et le piston de freinage 154 a une forme d'anneau centré sur l'arbre 120, s'étendant autour dudit piston de défreinage 178.

L'empilement de lamelles 132 et 134 est disposé en butée sur le carter 102 sur une de ses faces, tandis que la face opposée de l'empilement de lamelles 132 et 134 est au contact du piston de freinage 154. Ainsi, contrairement au mode de réalisation illustré sur les figures 2 à 4, la compression des lamelles 132 et 134 ne résulte ici que d'un effort appliqué sur une seule face.

De la même manière que pour le mode de réalisation présenté sur les figures 2 à 4, la rondelle ressort 168 présente trois zones d'appui :
- une zone d'appui de carter sur la périphérie externe 168A d'une première face de la rondelle ressort 168, au niveau de laquelle la rondelle ressort 168 est au contact d'une butée aménagée sur le carter 103, la partie interne 103 du carter de frein 101 présentent typiquement un usinage conique de manière à améliorer l'appui de la rondelle ressort 168 sur le carter 103 en position défreinée,
- une zone d'appui de défreinage sur la périphérie interne 168B de la face de la rondelle ressort 168 opposée à celle sur laquelle se trouve la zone d'appui de carter, au niveau de laquelle la rondelle ressort 168 est au contact du piston de défreinage 178,
- une zone d'appui de freinage située sur la même face de la rondelle que la zone d'appui de défreinage, à une position intermédiaire entre la périphérie interne 168B et la périphérie externe 168A de la rondelle ressort 168, au niveau de laquelle la rondelle ressort 168 est au contact du piston de freinage 154.

Selon d'autres modes de réalisation, le positionnement de la zone d'appui de carter et de la zone d'appui de défreinage peut être inversé, la zone d'appui de carter étant alors selon la périphérie interne 168B de la rondelle ressort 168, tandis que la zone d'appui de défreinage est selon la périphérie externe 168A de la rondelle ressort 168.

Le piston de freinage 154 est en contact d'une part avec les lamelles 134 et 132, et d'autre part avec la rondelle ressort 168. Lorsqu'il n'y a pas de pression appliquée via le conduit d'alimentation de défreinage 174, la rondelle ressort 168 exerce un effort sur le piston de freinage 154, qui transmet cet effort aux lamelles 134 et 132 de manière à réaliser un freinage statique comme illustré sur la figure 7. Comme vu précédemment, la zone d'appui de ce piston de freinage 154 située sensiblement au centre de la rondelle ressort 168 permet d'obtenir un freinage plus important que dans le cas où la zone d'appui serait située en périphérie de ladite rondelle ressort 168.

Lors de l'application d'une pression de défreinage via le conduit d'alimentation de défreinage 174, la pression est transmise dans la chambre de défreinage puis aux deux pistons 154 et 178 qui vont alors exercer un effort de flexion sur la rondelle ressort 168 comme illustré sur la figure 6.
En raison des zones d'appui de ces deux pistons 154 et 178 sur la rondelle ressort 168, et du rapport des sections desdits pistons 154 et 178, c'est alors le piston de défreinage 178 qui va jouer un rôle prédominant pour fléchir la rondelle ressort 168. En effet, ce piston de défreinage 178 a préférentiellement une section supérieure à celle du piston de freinage 154, et en raison de sa zone d'appui sur la rondelle ressort 168 au niveau de sa périphérie, l'effort nécessaire pour la fléchir est réduit.
Le piston de freinage 154 exerce également un effort de flexion sur la rondelle ressort 168, mais en raison de sa zone d'appui sur la rondelle ressort 168 sensiblement en son centre et de sa section moindre, son effet sur ladite rondelle ressort 168 sera négligeable par rapport à celui du piston de défreinage 178.

Ce mode de réalisation permet donc de réaliser un freinage statique plus important que dans un dispositif de freinage selon l'état de l'art, tout en ayant une pression de défreinage réduite de l'ordre de 25% par rapport à un dispositif de freinage selon l'état de l'art, typiquement en passant d'une pression défreinage de 20 bars à une pression de défreinage de l'ordre de 15 bars, la pression de défreinage variant en fonction du dimensionnement du frein.

Ce mode de réalisation particulier peut bien entendu être monté sur l'arbre de manière similaire à celui présenté sur les figures 2 à 4, à savoir être disposé sur l'arbre 120 et non plus à son extrémité, et le cas échéant disposé encadré de part et d'autre par des roulements, typiquement des roulements à rouleaux coniques montés en O. Les sections des pistons de freinage 154 et de défreinage 178 seront alors typiquement adaptées de manière à conserver un rapport similaire entre ces deux sections.

Bien que les modes de réalisation illustrés représentent une unique rondelle ressort, on comprendra bien que le dispositif de freinage selon l'invention peut être adapté à divers types d'empilement de rondelles ressort, notamment aux rondelles ressort montées en parallèles.

## Revendications

1. Dispositif de freinage comprenant
- un carter de frein (101) monté en rotation relative par rapport à un arbre (120),
- des premiers moyens de freinage (134), solidaires en rotation du carter de frein (101),
- des seconds moyens de freinage (132) solidaires en rotation de l'arbre (120), adaptés pour coopérer avec lesdits premiers moyens de freinage (134),
- un piston de freinage (154) adapté pour solliciter lesdits premiers moyens de freinage (134),
- au moins une rondelle ressort (168) comprenant une première face, une seconde face, une périphérie interne (168B) et une périphérie externe (168A), ladite rondelle ressort (168) étant montée en appui sur le carter de frein (101) selon une zone d'appui de carter située sur l'une des périphéries interne (168B) ou externe (168A) de la première face de ladite rondelle ressort (168), ladite rondelle ressort (168) présentant sur sa seconde face une zone d'appui de freinage, adaptée pour coopérer avec le piston de freinage (154) de manière à solliciter les premiers moyens de freinage (134) selon un sens de freinage,
- un piston de défreinage (178), adapté pour solliciter les moyens élastiques (168) selon un sens antagoniste audit sens de freinage,
- la au moins une rondelle ressort (168) présentant une zone d'appui de défreinage avec le piston de défreinage (178) sur l'autre desdites périphéries interne (168B) ou externe (168A) de la seconde face de la rondelle ressort (168), ledit dispositif étant **caractérisé en ce que** : ladite zone d'appui de freinage est située à une position intermédiaire de la au moins une rondelle ressort (168), entre la zone d'appui de carter et la zone d'appui de défreinage.

2. Dispositif selon la revendication précédente, **caractérisé en ce que** la zone d'appui de freinage est sensiblement au tiers de la distance entre la périphérie interne (168B) et la périphérie externe (168A) de ladite rondelle ressort (168).

3. Dispositif selon l'une des revendications précédentes, **caractérisé en ce que** lesdits premiers et seconds moyens de freinage (134, 132) comprennent un empilement de lamelles alternées.

4. Dispositif selon l'une des revendications précédentes, **caractérisé en ce qu'**il est encadré de part et d'autre par des roulements (144).

5. Dispositif selon la revendication précédente, **caractérisé en ce que** lesdits roulements (144) sont des roulements à rouleaux coniques, disposés de part et d'autre dudit dispositif de freinage sur l'arbre (120) et montés en O.

6. Dispositif selon l'une des revendications précédentes, **caractérisé en ce que** lesdits premiers et seconds moyens de freinage (132 et 134) ainsi que le piston de défreinage (178) sont montés de manière concentrique sur l'axe (120), le piston de défreinage (178) étant disposé sensiblement à la périphérie extérieure desdits premiers et seconds moyens de freinage (132 et 134).

7. Dispositif selon l'une des revendications précédentes, **caractérisé en ce qu'**il comprend une butée de contact (156) adaptée pour coopérer avec la rondelle ressort (168) et les premiers et seconds moyens de freinage (132 et 134), ladite butée de contact (156) étant disposée sensiblement en vis-à-vis dudit piston de freinage (154).

8. Dispositif selon l'une des revendications précédentes **caractérisé en ce que** lesdits pistons de freinage (154) et de défreinage (178) sont alimentés en pression par des conduits d'alimentation en pression (150, 174) distincts, et ont des chambres de mise en pression (152, 176) distinctes.

9. Dispositif selon l'une des revendications 1 à 8, **caractérisé en ce que** lesdits pistons de freinage (154) et de défreinage (178) sont alimentés par un même conduit d'alimentation en pression (174) et ont une chambre de mise en pression (176) commune.

10. Moteur hydraulique **caractérisé en ce qu'**il comprend un dispositif de freinage selon l'une des revendications précédentes.

## Patentansprüche

1. Bremsvorrichtung, Folgendes umfassend:
- ein Bremsengehäuse (101), das in Bezug auf eine Welle (120) drehend montiert ist,
- ein erstes Bremsmittel (134), das drehfest mit dem Bremsengehäuse (101) verbunden ist,
- ein zweites Bremsmittel (132), das drehfest mit der Welle (120) verbunden ist und das dafür eingerichtet ist, mit dem ersten Bremsmittel (134) zusammenzuarbeiten,
- einen Bremskolben (154), der dafür eingerichtet ist, auf das erste Bremsmittel (134) einzuwirken,
- wenigstens eine Scheibenfeder (168), die eine erste Seite, eine zweite Seite, einen inneren Rand (168B) und einen äußeren Rand (168A) umfasst, wobei die Scheibenfeder (168) am Bremsengehäuse (101) aufliegend montiert ist, und dies mit einem Gehäuseauflagebereich, der sich an einem von dem inneren (168B) oder äußeren (168A) Rand der ersten Seite der Scheibenfeder (168) befindet, wobei die Scheibenfeder (168) auf ihrer zweiten Seite einen Bremsauflagebereich hat, der dafür eingerichtet ist, mit dem Bremskolben (154) derart zusammenzuarbeiten, dass er auf das erste Bremsmittel (134) in einer Bremsrichtung einwirkt,
- einen Kolben zum Lösen der Bremse (178), der so eingerichtet ist, dass er auf das elastische Mittel (168) in einer zur Bremsrichtung entgegengesetzten Richtung einwirkt,
- wobei die wenigstens eine Scheibenfeder (168) einen Auflagebereich zum Lösen der Bremse mit dem Kolben zum Lösen der Bremse (178) hat, und dies auf dem anderen von dem inneren (168B) oder äußeren (168A) Rand der zweiten Seite der Scheibenfeder (168),
wobei die Vorrichtung durch Folgendes gekennzeichnet ist:
der Bremsauflagebereich befindet sich in einer dazwischenliegenden Position der wenigstens einen Scheibenfeder (168), zwischen dem Gehäuseauflagebereich und dem Auflagebereich zum Lösen der Bremse.

2. Vorrichtung nach dem vorhergehenden Anspruch, **dadurch gekennzeichnet, dass** der Bremsauflagebereich im Wesentlichen bei einem Drittel des Abstands zwischen dem inneren Rand (168B) und dem äußeren Rand (168A) der Scheibenfeder (168) angeordnet ist.

3. Vorrichtung nach einem der vorhergehenden Ansprüche, **dadurch gekennzeichnet, dass** das erste und zweite Bremsmittel (134, 132) einen Stapel abwechselnder Lamellen umfasst.

4. Vorrichtung nach einem der vorhergehenden Ansprüche, **dadurch gekennzeichnet, dass** sie auf beiden Seiten von Wälzlagern (144) eingefasst ist.

5. Vorrichtung nach dem vorhergehenden Anspruch, **dadurch gekennzeichnet, dass** die Wälzlager (144) Wälzlager mit kegelförmigen Walzen sind, die auf beiden Seiten der Bremsvorrichtung auf der Welle (120) angeordnet und in O-Anordnung montiert sind.

6. Vorrichtung nach einem der vorhergehenden Ansprüche, **dadurch gekennzeichnet, dass** das erste und zweite Bremsmittel (132 und 134) und der Kolben zum Lösen der Bremse (178) auf konzentrische Weise auf der Achse (120) montiert sind, wobei der Kolben zum Lösen der Bremse (178) im Wesentlichen am außen liegenden Rand des ersten und zweiten Bremsmittels (132 und 134) angeordnet ist.

7. Vorrichtung nach einem der vorhergehenden Ansprüche, **dadurch gekennzeichnet, dass** sie einen Kontaktanschlag (156) umfasst, der dafür eingerichtet ist, dass er mit der Scheibenfeder (168) und dem ersten und zweiten Bremsmittel (132 und 134) zusammenarbeitet, wobei der Kontaktanschlag (156) im Wesentlichen gegenüber dem Bremskolben (154) angeordnet ist.

8. Vorrichtung nach einem der vorhergehenden Ansprüche, **dadurch gekennzeichnet, dass** die Kolben zum Bremsen (154) und zum Lösen der Bremse (178) durch getrennte Druckversorgungsleitungen (150, 174) mit Druck versorgt werden und getrennte Druckkammern (152, 176) haben.

9. Vorrichtung nach einem der Ansprüche 1 bis 8, **dadurch gekennzeichnet, dass** die Kolben zum Bremsen (154) und zum Lösen der Bremse (178) durch dieselbe Druckversorgungsleitung (174) versorgt werden und eine gemeinsame Druckkammer (176) haben.

10. Hydraulikmotor, **dadurch gekennzeichnet, dass** er eine Bremsvorrichtung nach einem der vorhergehenden Ansprüche umfasst.

## Claims

1. A braking device comprising
- a brake housing (101) mounted in relative rotation relative to a shaft (120),
- first braking means (134), rotatable with the brake housing (101),
- second braking means (132) rotatable with the shaft (120), adapted to cooperate with said first braking means (134),
- a braking piston (154) adapted to urge said first braking means (134),
- at least one spring washer (168) comprising a first face, a second face, an internal periphery (168B) and an external periphery (168A), said spring washer (168) being mounted resting on the brake housing (101) according to a housing resting zone located on one of the internal (168B) or external (168A) peripheries of the first face of said spring washer (168), said spring washer (168) having on its second face a braking resting zone, adapted to cooperate with the braking piston (154) so as to urge the first braking means (134) according to a braking direction,
- a brake release piston (178), adapted to urge the elastic means (168) according to a direction opposite said braking direction,
- the at least one spring washer (168) having a brake release resting support zone with the brake release piston (178) on the other of said internal (168B) or external (168A) peripheries of the second face of the spring washer (168), said device being **characterised in that** said braking resting zone is located at an intermediate position of the at least one spring washer (168), between the housing resting zone and the break release resting zone.

2. The device according to the previous claim, **characterised in that** the braking resting zone is substantially at a third of the distance between the internal periphery (168B) and the external periphery (168A) of said spring washer (168).

3. The device according to one of the previous claims, **characterised in that** said first and second braking means (134, 132) comprise a stack of alternating plates.

4. The device according to one of the previous claims, **characterised in that** it is enclosed on either side by bearings (144).

5. The device according to the previous claim, **characterised in that** said bearings (144) are conical roller bearings arranged on either side of said braking device on the shaft (120) and mounted in a direct mounting configuration.

6. The device according to one of the previous claims, **characterised in that** said first and second braking means (132 and 134) as well as the anti-skid piston (178) are mounted concentrically on the axis (120), the brake release piston (178) being arranged substantially at the outer periphery of said first and second braking means (132 and 134).

7. The device according to one of the previous claims, **characterised in that** it comprises a contact stop (156) adapted to cooperate with the spring washer (168) and the first and second braking means (132 and 134), said contact stop (156) being arranged substantially opposite said braking piston (154).

8. The device according to one of the previous claims, **characterised in that** said brake (154) and brake release (178) pistons are pressure-fed by distinct pressure-supply conduits (150, 174), and have distinct pressurising chambers (152, 176).

9. The device according to one of Claims 1 to 8, **characterised in that** said brake (154) and brake release (178) pistons are fed by the same pressure-supply conduit (174) and have a common pressurising chamber (176).

10. A hydraulic engine, **characterised in that** it comprises a braking device according to one of the previous claims.
